(19) Europäisches Patentamt
European Patent Office
Office européen des brevets

(11) Veröffentlichungsnummer: **0 031 868**
**A2**

# (12) EUROPÄISCHE PATENTANMELDUNG

(21) Anmeldenummer: 80104344.9

(22) Anmeldetag: 24.07.80

(51) Int. Cl.³: C 08 J 5/18
C 08 J 3/24, C 08 J 7/16
B 29 D 7/24, B 29 C 25/00
//(C08J5/18, C08L23/26)

(30) Priorität: 08.10.79 DE 2940719
08.11.79 DE 2945048
15.01.80 DE 3001159

(43) Veröffentlichungstag der Anmeldung:
15.07.81 Patentblatt 81/28

(84) Benannte Vertragsstaaten:
AT BE CH DE FR GB IT LI NL SE

(71) Anmelder: Kabel- und Metallwerke
Gutehoffnungshütte Aktiengesellschaft
Kabelkamp 20 Postfach 260
D-3000 Hannover 1(DE)

(72) Erfinder: Voigt, Hermann Uwe, Dr. Dipl.-Chem.
Steimbker Hof 11
D-3000 Hannover(DE)

(72) Erfinder: Patzke, Frank
Dürerring 25
D-3160 Lehrte(DE)

(72) Erfinder: Klein, Gerhard
Bohmter Strasse 51
D-4500 Osnabrück(DE)

(72) Erfinder: Schmidtchen, Hans Martin, Ing. grad.
Hasestrasse 24
D-4500 Osnabrück(DE)

(74) Vertreter: Mende, Eberhard, Dipl.-Ing.
Kabelkamp 20
D-3000 Hannover 1(DE)

## (54) Verfahren zur Herstellung von Schrumpfartikeln, Vorrichtung zur Durchführung des Verfahrens und so erhaltene Artikel.

(57) Zur Herstellung von Schrumpfartikeln (6) werden Basispolymere verwendet, die nach Aufpfropfen von Organosilanen vor oder während der Formgebung (3) des Vorformlings anschließend unter Feuchtigkeitseinwirkung (5) vernetzt werden.

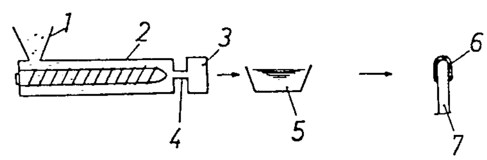

Fig.1

EP 0 031 868 A2

0031868

BEZEICHNUNG GEÄNDERT, siehe Titelseite

K a b e l - u n d M e t a l l w e r k e
Gutehoffnungshütte Aktiengesellschaft

1-1700/1726/2-209

Verfahren zur Herstellung von Schrumpfartikeln

Die vorliegende Erfindung betrifft die Herstellung von Schrumpfartikeln, wie Schrumpfschläuchen, -manschetten, -kappen und dergleichen aus extrudierbaren Werkstoffen, bei der zunächst ein Vorformling gespritzt bzw. extrudiert, anschließend vernetzt und in diesem vernetzten Zustand aufgeweitet sowie durch Abkühlen dieses aufgeweiteten Formlings dessen aufgeweiteter Zustand durch Einfrieren fixiert wird.

Bekannt ist es bereits (OE-PS 188.510), zur Herstellung von Schrumpfschläuchen aus thermoplastischen Massen den extrudierten oder gespritzten Schlauch mit geringerem Durchmesser zu erhitzen, mittels Druckluft aufzuweiten und gegen die Innenwand eines den größeren Durchmesser bestimmenden Kanals zu drücken. In einer dahinter angeordneten Kühlzone wird der so aufgeweitete Schlauch abgekühlt, so daß er den angenommenen Durchmesser beibehält. Nachteilig, was die Materialien betrifft, ist hierbei jedoch, daß solche Schrumpfschläuche aus Thermoplasten, beispielsweise auch aus Polyvinylchlorid, für die heutigen Anforderungen nicht ausreichend temperaturbeständig sind und zudem nicht das gewünschte "elastische Formgedächtnis" aufweisen, d. h. beim Schrumpfvorgang nicht mehr in allen Details ihre ursprüngliche Form einnehmen.

Abhilfe schafft hier eine ebenfalls bekannte Technik zur Herstellung unter dem Handelsnamen Thermofit vertriebener Wärmeschrumpferzeugnisse, bei der ein Polyolefin-Material hoher Dichte zum Spritzen von Formteilen verwendet wird. Diese Teile werden anschließend einer hochintensiven Elektronenbestrahlung ausgesetzt, so daß ein vernetztes dreidimensionales Maschenwerk der Moleküle erreicht wird. Hieraus ergibt sich ein mechanisch widerstandsfähiges Formteil, das kriechfest ist, nicht aufreißt und ein "elastisches Formgedächtnis" aufweist. Wird z. B. ein so verarbeiteter Schrumpfschlauch über den zu überziehenden Gegenstand gezogen, so schrumpft er bei kurzer Erwärmung über den Kristallitschmelzpunkt, im bekannten Fall oberhalb $135^0$, schnell in seine ursprüngliche Form und Abmessung zurück und es entsteht ein fester und widerstandsfähiger Überzug.

Für das vorstehend beschriebene Verfahren können beliebige Grundpolymere, auch modifiziert, eingesetzt werden, je nach den speziellen Erfordernissen beim Einsatz. Voraussetzung ist jedoch in jedem Fall die Vernetzung durch Bestrahlung, bevor die Formlinge in erwärmtem Zustand aufgeweitet oder gedehnt werden. Dies erfordert große Sorgfalt (Strahlungsschutz) sowie einen großen Aufwand von Apparaturen, wodurch die Herstellung erschwert und damit verteuert wird.

Das eingangs erwähnte bekannte Herstellungsverfahren hat aber auch fertigungstechnische Nachteile in so weit, als insbesondere zur Haftung neigende Materialien nicht oder nur dann eingesetzt werden können, wenn die Reibung zwischen Oberfläche des Schlauches und Kanal-Innenfläche durch Trennmittel herabgesetzt oder sonstige Vorkehrungen getroffen werden, die eine Berührung zwischen Kanal und Schlauch vermeiden. Wegen der maßgeblichen, ja auch erstrebten, Formgebungswirkung des Kanals ist dies jedoch nicht möglich. Wenn nicht gar mit Beschädigungen des Schlauches, so ist doch bei diesem Herstellungsverfahren zumindest mit Oberflächenrauhigkeiten zu rechnen, die abgesehen von dem nicht einwandfreien Aussehen, Angriffsstellen für durch spätere Umwelteinflüsse hervorgerufene Korrosionserscheinungen sein können.

Der Erfindung liegt deshalb die Aufgabe zugrunde, eine Möglichkeit zu finden, die ebenfalls die Herstellung von Schrumpfartikeln mit "elastischem Formgedächtnis" bei gleichen oder zumindest vergleichbaren Eigenschaften gestattet,

ohne auf die recht aufwendige Strahlungsvernetzung angewiesen zu sein sowie den Herstellungsprozeß zu vereinfachen und so zu gestalten, daß Schrumpfartikel in einwandfreier Qualität herstellbar sind.

Diese Aufgabe wird gemäß der Erfindung dadurch gelöst, daß als Basismaterialien für die Schrumpfartikel Polymere dienen, die nach Aufpfropfen von Vernetzungshilfsmitteln, wie Organo-Silanen, vor oder während der Formgebung des Vorformlings unter Feuchtigkeitseinwirkung vernetzt werden. Dabei ist ferner wesentlich, daß die Feuchtigkeitseinwirkung mittels einer speziellen, der Herstellung des Vorformlings nachgeschalteten Einrichtung, vorgenommen wird oder bereits durch die den Polymeren und Zusatzstoffen von Hause aus anhaftenden Feuchtigkeitsmengen in der Form erfolgen oder schließlich auch durch einfaches Lagern unter Umgebungseinfluß erreicht werden kann.

Die Erfindung beruht nämlich auf der Erkenntnis, daß im Gegensatz zur seit langem bekannten und z. B. in der Kabeltechnik im Einsatz befindlichen peroxidischen Vernetzung unter Wärmeeinwirkung durch die Aufpfropfung reaktionsfähiger niedermolekularer Verbindungen, z. B. von Organo-Silanen, als Vernetzungshilfsmittel auf die Makromoleküle der Basismaterialien, welche ihrerseits im Verlauf von Sekundärreaktionen zu einer polyfunktionellen Kettenverknüpfung führen, sich "bündelartige" Vernetzungsstellen bilden, wobei über einen Vernetzungsknoten gleichzeitig mehrere Makromoleküle aneinander fixiert sind. Dieser besondere chemische Vernetzungsmechanismus führt zu hohen Bindungskräften im Molekularbereich, die bei Erwärmung im thermoplastischen Zustand zwar gelockert und damit eine Aufweitung z. B. des Formlings gestatten, nach einer Wiedererwärmung und raschen Schrumpfung aber ihre ursprüngliche Gestalt wieder einnehmen.

Auch aus solchen Materialien hergestellte Schrumpfartikel haben demnach ein "elastisches Formgedächtnis", sie sind daher für beliebige Einsatzmöglichkeiten, z. B. als Schläuche und Kappen, etwa für den druckdichten und feuchtigkeitsfesten Abschluß der Enden elektrischer Kabel, oder als Manschetten, ein- oder mehrteilig, zum Schutz von Anschluß- oder Verbindungsstellen elektrischer Kabel oder auch Rohrbündelkabel geeignet. Die Eigenschaften gegenüber strahlungsvernetzten Schrumpfartikeln sind nicht bzw. nur unwesentlich

verändert, das Herstellungsverfahren selbst aber wesentlich vereinfacht.

In Durchführung der Erfindung hat es sich als vorteilhaft erwiesen, die Vernetzung des Vorformlings während einer Feuchtigkeitseinwirkung bei erhöhten Temperaturen zwischen 80° C und 200° C, vorzugsweise 140° bis 180° C, vorzunehmen. Die Aufweitung auf den einzufrierenden Zustand erfolgt dann unmittelbar anschließend, d. h. " on line", bei noch erwärmtem Vorformling. Wird, wie in Weiterführung des Erfindungsgedankens weiter vorgesehen, die Vernetzungsreaktion durch den Form- oder Spritzvorgang bei der Herstellung des Vorformlings selbst bewirkt, dann kann auf eine gesonderte Feuchtigkeitsbehandlung bei höherer Temperatur verzichtet werden. Die Temperaturerhöhung vor der Aufweitung kann unabhängig von der Feuchtigkeitsbehandlung vorgenommen werden, z. B. bei mikrowellenabsorptionsfähigen Mischungen durch eine UHF-Erwärmung. Die Wirtschaftlichkeit des Herstellungsverfahrens kann damit weiter verbessert werden.

Die Vernetzung selbst kann, wie bei der Feuchtigkeitsvernetzung von Kabeln bereits im Einsatz, in einer Art Sauna erfolgen, d. h. in einer Wasserdampfatmosphäre mit erhöhten Temperaturen. Mit Vorteil kann in Durchführung der Erfindung zu dem gleichen Zweck aber auch ein erwärmtes Glycerin-Wasser- oder auch ein Öl-Wasser-Gemisch verwendet werden, das einmal den Vorteil gleichmäßiger Temperaturverhältnisse ohne besonderen Steuerungsaufwand mit sich bringt, zum anderen aber durch die mit den Polymeren der Schrumpfartikel besser als Wasser verträglichen Komponenten zu einem schnelleren Eindiffundieren der für die Vernetzung benötigten geringen Wassermengen sorgt.

Als Basismaterialien können alle Polymere verwendet werden, bei denen eine Anlagerung von Organo-Silanen durch radikalisch initiierte Pfropfung möglich ist. Als besonders zweckmäßig, schon aus Gründen der Verarbeitbarkeit, haben sich für die Zwecke der Erfindung das Polyäthylen sowie Äthylen-Mischpolymerisate mit Vinylacetat- bzw. Acrylat-Comonomeren erwiesen. Als Basismaterialien können aber ebenso solche auf der Basis Äthylen-Propylen-Kautschuk allein oder im Verschnitt mit Polypropylen verwendet werden.

Zur UV-Beständigkeit, aber auch zur Verbesserung der mechanischen und rheologischen Eigenschaften der Mischung bei der Herstellung der Vorformlinge hat

es sich als vorteilhaft erwiesen, dem Basismaterial Ruß zuzugeben. Besonders geeignet hierfür sind sogenannte Acetylen-Ruße mit nichthygroskopischen Eigenschaften. Diese Ruße haben zudem eine hohe Leitfähigkeit, es reichen im Gegensatz zu den sonst üblichen Rußen schon geringe Mengen von 1,5 bis 30, vorzugsweise 3,0 bis 15 Teilen auf 100 Teile Polymeres aus, um dem Schrumpfartikel antistatische Eigenschaften oder gegebenenfalls Leitfähigkeit bei guten mechanischen und rheologischen Eigenschaften zu verleihen. Die Verwendung nichthygroskopischer Acetylen-Ruße ist ferner wichtig, weil sie die Silanvernetzung nicht stören. Eine Menge von 5 bis 40, vorzugsweise 8 bis 20, Teilen nichthygroskopischen Rußes, bezogen auf 100 Teile Polymeres, erscheint daher für die nach der Erfindung herzustellenden Schrumpfartikel als am zweckmäßigsten.

Neben oder anstatt der als Füllstoffe wirkenden Ruße können auch andere nichthygroskopische Füllstoffe eingesetzt werden, wie z. B. Kreide, Kaolin oder Talkum; diese Füllstoffe werden vorteilhaft in Mengen von 5 bis 30, vorzugsweise 10 bis 20 Teilen, bezogen auf 100 Teile Polymeres, verwendet. Neben einer Verbilligung der Mischung und damit des Endproduktes lassen sich auch Härte, Wärmestandfestigkeit und Druckfestigkeit verbessern.

In Weiterführung der Erfindung ist es besonders vorteilhaft, in Kombination mit Ruß bzw. anderen Füllstoffen Stoffe zuzugeben, die bei höheren Temperaturen in definierter Weise Wasser abspalten, welches dann unmittelbar im Werkzeug die Feuchtigkeitsvernetzung herbeiführt. Als solche Stoffe eignen sich besonders partiell hydrophobierte Kieselsäuren bzw. Silikate oder auch Aluminiumoxidhydrate. Letztere spalten bei Temperaturen oberhalb $180^0$ C gemäß der Gleichung

$$2Al(OH)_3 \longrightarrow Al_2O_3 + 3H_2O$$

Wasser ab. Als für die Durchführung der Erfindung besonders geeignet hat sich ein Aluminiumoxidhydrat der Firma Martinswerk erwiesen, das unter dem Handelsnamen "Martinal A-S" bzw. in silanisierter Form unter "Martinal A-S/101" bekannt ist. Diese Füllstoffe haben eine durchschnittliche Korngröße von ca. 0,4 $\mu$ und sind besonders in der silanisierten Form mit Polyäthylen gut verträglich.

BAD ORIGINAL

Ein weiterer Vorteil des bereits erwähnten Rußes ergibt sich noch dann, wenn, wie in Weiterführung der Erfindung auch vorgesehen, die Vernetzung unter Feuchtigkeitseinwirkung bei Raumtemperatur oder wenig darüber liegender Temperatur erfolgt und zum Zwecke der Aufweitung des Vorformlings anschließend eine Erwärmung dieses Spritzteiles zu erfolgen hat. Dann kann nämlich mit großem Vorteil die Erwärmung über eine Mikrowellenbestrahlung erfolgen, da der gewählte Ruß für eine Mikrowellenabsorption hervorragend geeignet ist. Die hierbei erzielbare Temperatur ist von der Intensität des UHF-Feldes abhängig, sie kann beliebig gesteuert werden. Eine Temperatur zwischen $120^{0}$ und $170^{0}$ C, vorzugsweise zwischen $130^{0}$ und $150^{0}$ C, hat sich für die Zwecke der Erfindung als zweckmäßig erwiesen.

Wesentlich für die gewünschte Feuchtigkeitsvernetzung und damit Brauchbarkeit durch Aufpfropfen von Vernetzungshilfsmitteln ist ferner, daß diese Mittel, z. B. Organosilane, in ausreichender aber in Bezug auf die Peroxide ausgewogener Menge, zur Verfügung stehen, um die für die Rückschrumpfung aus einem aufgeweiteten Zustand notwendigen molekularen Bindungskräfte zu erzeugen. Das molare Verhältnis von Radikalstellen am Makromolekül erzeugenden Peroxiden zur Menge der zugegebenen Silane beträgt daher vorteilhaft in Durchführung der Erfindung etwa 1 : 10.

Zur Vereinfachung bekannter Herstellungsverfahren geht man in Durchführung der Erfindung so vor, daß die Aufweitung des hohlen Formstranges bis auf den vergrößerten Enddurchmesser zum schrumpffähigen Schlauch durch eine mehrfache Teilaufweitung mit jede Teilaufweitung abschließender Kalibrierung des Formstranges vorgenommen wird, wobei die Aufweitung durch zwischen jeder Kalibrierung auf die Oberfläche des Formstranges einwirkenden Unterdruck erfolgt. Diese Maßnahme sichert Endprodukte hoher Qualität, einmal was das äußere Aussehen angeht und zum anderen, was die Schrumpfeigenschaften betrifft. Letzteres ist insbesondere dann der Fall, wenn vernetzbare bzw. zur Zeit der Aufweitung bereits vernetzte Werkstoffe eingesetzt werden.

Als vorteilhaft hat es sich in Weiterführung der Erfindung erwiesen, wenn die Aufweitung des hohlen Formstranges bis auf den Enddurchmesser in einem

unter Unterdruck stehenden Flüssigkeitsbad erfolgt. Hierdurch wird eine besonders hohe Oberflächengüte des schrumpffähigen Endproduktes erreicht. Das gilt vor allem dann, wenn in Durchführung des Erfindungsgedankens diese Flüssigkeit, z. B. Wasser, gleichzeitig als Schmier- oder Trennmittel für den Kalibriervorgang dient. Diese einfache Möglichkeit einer selbsttätigen, wartungsfreien Schmier- oder Trennmittelversorgung ist bei den bisher bekannt gewordenen Vorrichtungen zum Aufweiten schrumpffähiger Produkte nicht gegeben.

Der Aufweitvorgang selbst ist dem verwendeten Polymermaterial, z. B. Polyvinylchlorid, vernetztes oder unvernetztes Polyäthylen usw., anzupassen. Als zweckmäßig hat es sich hierbei grundsätzlich erwiesen, die Aufweitung stetig, d. h. in gleichmäßigen Schritten der Durchmesservergrößerung erfolgen zu lassen. Mitunter kann es dagegen auch vorteilhaft sein, wenn die Aufweitung in Stufen vorgenommen wird.

Zur Aufweitung eines hohlen Formstranges zum Zwecke der Durchmesservergrößerung ist in der Regel eine Wärmebehandlung des als vernetzt oder unvernetzt vorliegenden Vorformlings voranzustellen. Hierzu kann z. B. ein entsprechend temperierbares Flüssigkeitsbad der Aufweitvorrichtung vorgeschaltet sein, die Erwärmung kann aber auch durch Wärmestrahlung von außen oder durch innere Erwärmung, etwa über eine Hochfrequenzspule, erfolgen.

Mitunter kann es jedoch auch vorteilhaft sein, insbesondere wenn eine mehrfache Vergrößerung des ursprünglichen Durchmessers beabsichtigt ist, die wachsende Durchmesservergrößerung des Formstranges mit einer stetig zunehmenden Er- oder Durchwärmung des Formstranges zu verbinden. Eine entsprechende Dosierung der Wärmemenge je nach fortgeschrittener Aufweitung ist dann in bekannter Weise vorzunehmen.

Bei einer Aufweitung, die einem Mehrfachen des ursprünglichen Durchmessers des Formstranges (Vorformling) entspricht, kann es mitunter ebenfalls von Vorteil sein, wenn während der Aufweitung des hohlen Formstranges durch den auf die äußere Oberfläche wirkenden Unterdruck die innere Oberfläche mit einem sog. Stützdruck beaufschlagt wird. Damit ist ein Zusammenfallen des Formlings insbesondere dann verhindert, wenn die Wandstärke im Verhältnis

zum Gesamtdurchmesser sehr kleine Werte annimmt. In diesem Zusammenhang kann, falls gewünscht, der Stützdruck im Innern des Formstranges, beispielsweise in den ersten Stufen der Aufweitung, zur Unterstützung der Durchmesservergrößerung von innen her herangezogen werden.

Zur Durchführung des Verfahrens nach der Erfindung hat sich eine Vorrichtung als äußerst vorteilhaft erwiesen, bei der der Aufweitung des hohlen Formstranges nach oder während einer Erwärmung ein sog. Kalibrator aus einzelnen in Durchlaufrichtung hintereinander angeordneten Lochscheiben dient, deren Bohrungsdurchmesser, in Durchlaufrichtung gesehen, stetig oder stufenweise zunimmt. Solche Kalibratoren, zur Herstellung von Kunststoffrohren mit gleichbleibenden äußeren Abmessungen bereits bekannt, gewährleisten eine stetige Führung über extrem kleine Berührungsflächen, die Oberflächen hoher Güte erreichen lassen. Dadurch, daß nach einem weiteren Erfindungsgedanken die Lochscheiben alle gemeinsam in einem oder in Paketen zusammengefaßt jeweils in gesonderten ggf. temperierbaren und dicht verschließbaren Flüssigkeit führenden Behältern angeordnet sind, ist während des Durchlaufens der Lochscheiben stets eine einwandfreie Führung mit verschwindend kleiner Reibung sichergestellt. Die Höhe des selbstverständlich einstellbaren Flüssigkeitsniveaus ist zweckmäßig so gewählt, daß die Lochscheiben völlig z. B. von Wasser überdeckt sind. Über diesem Wasserspiegel ist, z. B. durch eine entsprechende Einstellung der Absaugpumpen, ein Unterdruck bis zu 8 m WS eingestellt, der dafür sorgt, daß jeweils zwischen je zwei aufeinanderfolgenden Lochscheiben die Wandung des Formstranges angesaugt, d. h. der Strang aufgeweitet wird. Der Unterdruck steht auch zwischen den nächstfolgenden Lochscheiben mit gegenüber den ersten vergrößerten Bohrungsdurchmessern an, so daß eine gegenüber der ersten weitere Aufweitung erfolgt etc.

Wegen der beim Einlauf in das Lochscheibenpaket noch weicheren Struktur des wärmebehandelten Formstranges hat es sich ferner als zweckmäßig erwiesen, daß der Abstand der Lochscheiben mit zunehmendem Bohrungsdurchmesser in Durchlaufrichtung ebenfalls zunimmt. Damit ist die Gefahr behoben, daß sich der Formstrang beim Durchlauf in noch weichem Zustand in die ihn immer wieder begrenzenden Lochscheiben eindrückt, einreißt oder gar zum Abreißen des kontinuierlich durchlaufenden Formstranges führt.

Die Eigenschaften der nach dem Verfahren nach der Erfindung hergestellten Produkte lassen sich nach einem weiteren Erfindungsgedanken variieren, wenn die begrenzenden Wandungen dieser Formteile ganz oder teilweise aus geschäumtem Material bestehen. Neben einer erheblichen Material- und damit auch Gewichtsersparnis liegt ein weiterer Vorteil in der Wärmedämmung und gegenüber einer üblichen Schaumisolierung in der durch die Vernetzung erreichten hohen mechanischen Standfestigkeit. Besteht der geschäumte Teil des Schrumpfformteiles aus einem unter der Einwirkung von Feuchtigkeit vernetzbaren Olefinpolymerisat oder Olefinmischpolymerisat, auf dessen Basismoleküle Silane oder Silanverbindungen aufgepfropft sind, wird ein Schrumpfformteil mit vernetzten Bereichen erzeugt, deren Vernetzungsgrad zwischen 30 und 80 % liegt. Es genügt damit den gestellten Forderungen vollauf.

Die Erfindung geht dabei von der Überlegung aus, daß die mechanische Standfestigkeit von geschäumten Isolierungen außer vom gewählten Basispolymer vor allem auch abhängig ist von der Anzahl, der Größe und der Verteilung der beim Schäumvorgang gebildeten Poren. Je kleiner diese Poren sind und je gleichmäßiger ihre Verteilung über den Isolierquerschnitt ist, um so besser ist auch die Standfestigkeit bzw. je zäher die Schmelze im Moment des Schäumvorganges ist, um so höhere Aufschäumgrade bei gleichmäßiger Porenstruktur werden erreicht. Diese Überlegung ist physikalisch-chemisch gegründet, da Porengröße und Struktur entscheidend von den beiden Größen Dampfdruck des Treibmittels und Oberflächenspannung der Schmelze abhängig sind. Die Oberflächenspannung ist aber um so größer, je höher die Viskosität der Schmelze ist. In der Praxis ging man deshalb bisher so vor, daß zur Erhöhung der Schmelzviskosität unmittelbar vor dem Schäumvorgang eine Temperaturabsenkung erfolgt. Diese Möglichkeit ist jedoch recht aufwendig, da hierzu eine besondere Verfahrenstechnik mit langen Extrudern notwendig ist.

Zur Herstellung eines ganz oder teilweise geschäumten Schrumpfformteiles geht man zweckmäßig in Durchführung der Erfindung so vor, daß zunächst ein Vorformling gespritzt bzw. extrudiert wird, dessen begrenzende Wandungen ganz oder teilweise zum Aufschäumen gebracht und vernetzt werden. Anschließend wird der Formling in diesem geschäumten und vernetzten Zustand aufgeweitet sowie durch Abkühlen dieses aufgeweiteten Formlings dessen aufgeweiteter Zustand durch Einfrieren fixiert. Die Vernetzung kann hierbei auf jede beliebige Art erfolgen, z. B. auch dadurch, daß die Formteile vor, während oder nach dem Schäumvorgang einer energiereichen Strahlung unterworfen werden. Man kann aber mit besonderem Vorteil auch so vorgehen, daß auf das Olefinpolymerisat zunächst das Silan aufgepfropft, anschließend das gepfropfte Material granuliert und mit Treibmitteln versetzt wird und daß schließlich das so vorbereitete Material der Schäumextrusion unterworfen wird. Dabei kann die Schmelzentemperatur in optimaler Weise der Zersetzungstemperatur des Treibmittels angepaßt werden. Dadurch und bedingt durch die relativ hohe Zähigkeit der Schmelze während des Schäumvorganges läßt sich eine feinzellige, über den gesamten Querschnitt gleichmäßige Porenstruktur erreichen.

Zum Aufschäumen der in Anwesenheit von Feuchtigkeit vernetzbaren Mischung können sogenannte chemische Treibmittel verwendet werden. Wenn Pfropfung und Schäumvorgang jedoch im gleichen Verarbeitungsschritt durchgeführt werden, ist bei der Auswahl dieser Treibmittel darauf zu achten, daß im Zuge des Treibmittelzerfalls entstehende Nebenprodukte sich nicht störend auf den Pfropfvorgang auswirken. Um das mit Sicherheit auszuschließen, können in Weiterführung der Erfindung anstelle der chemischen Treibmittel physikalische Treibmittel verwendet werden, z. B. niedere fluorierte bzw. chlorierte Kohlenwasserstoffe sowie Stickstoff. Auch diese Treibmittel führen zu hohen Aufschäumgraden, zu feinzelliger gleichmäßiger Porenstruktur und zu guter mechanischer Standfestigkeit des vernetzten Produktes, ohne daß eine Störung des Pfropfvorganges bewirkt wird.

Vorteilhaft kann es mitunter auch sein, wenn in Weiterführung der Erfindung die zum Aufschäumen verwendeten Treibmittel gleichzeitig als Träger zumindest für einen Teil der zur Vernetzung erforderlichen Feuchtigkeit verwendet werden. So können feuchte Gase, z. B. auch Wasserdampf, in die Mischung eingebracht werden, die zu einem kurzfristigen Vernetzen führen. Die Wasserlagerungszeit kann damit erheblich herabgesetzt werden.

Die Treibmittel - Feuchtigkeitsträger oder nicht - können der Mischung in üblicher Weise zugesetzt werden. Besonders einfach ist es jedoch, wenn das Treibmittel in pulverförmigem Zustand aufgetrommelt wird. Mitunter kann es aber auch vorteilhaft sein, das gepfropfte Olefinpolymerisat oder Olefinmischpolymerisat mit einem treibmittelhaltigen Polymerbatch zu verschneiden.

Soll, wie bereits erläutert, die Vernetzung des geschäumten Materials unter der Einwirkung von Feuchtigkeit vor sich gehen, dann hat es sich weiterhin als vorteilhaft erwiesen, den Vernetzungsprozeß durch Verwendung wasserabspaltender Treibmittel zu initiieren. Auf diese Weise kann z. B. in all den Fällen vorgegangen werden, wo die während des Kühlwasserdurchlaufs von der Isolierung automatisch aufgenommene Wassermenge für den Vernetzungsprozeß nicht ausreicht.

Eine weitere Möglichkeit des Aufbringens zusätzlicher Wassermengen ist in Weiterführung der Erfindung die, daß den Olefinpolymerisaten oder -mischpolymerisaten nichthygroskopische Metalloxide, wie Zinn oder Zinkoxide, zugegeben werden. Diese Materialien führen in Verbindung mit der sogenannten Siloxanvernetzung bereits unmittelbar nach Abschluß der Formgebung zu Vernetzungsgraden um 30 %. Dieser z. B. durch Zinkoxidzusatz erhaltene Vernetzungseffekt hat bereits eine deutliche Zunahme der Schmelzenviskosität zur Folge, die sich zu der durch die Pfropfung bereits erreichten Viskosität addiert. Damit ergibt sich eine besonders zähe Schmelze, die zu einer sehr günstigen Porenstruktur des Schaums führt. In diesem Zusammenhang kann es mitunter von Vorteil sein, wenn die Zugabe der Metalloxide erst nach dem Pfropfvorgang erfolgt. Auf diese Weise sind Schwierigkeiten bei der Extrusion etwa durch Anvernetzung während des Pfropfvorganges von vornherein vermieden.

Das eingesetzte Zinkoxid trägt aber neben den bereits erwähnten Verbesserungen noch zu weiteren Vorteilen bei. So ist es bekannt, daß das Zinkoxid die Kinetik des Zersetzungsvorganges der üblichen Treibmittel beeinflußt, d. h. daß die Zersetzungstemperaturen in Gegenwart solcher Oxide zum Teil erheblich gesenkt werden. Damit ist es möglich, den Treibmittelzerfall bereits bei relativ niedrigen Temperaturen erfolgen lassen, was sich ebenfalls günstig auf die Schaumstruktur auswirkt. Weitere Vorteile ergeben sich in Bezug auf die elektrischen Eigenschaften des Materials, da im Material verbliebene Reste an unzersetzten Treibmitteln nunmehr praktisch vernachlässigbar sind.

Die Pfropfung und das Aufschäumen der verwendeten Materialien kann zweckmäßig im gleichen Arbeitsgang erfolgen. Dies führt zu einer Erhöhung der Betriebssicherheit und Verminderung der Störanfälligkeit des Verfahrens. Die gleiche Möglichkeit ergibt sich aber auch dann, wenn, wie in Weiterführung der Erfindung ebenfalls vorgesehen, Schichten aus geschäumtem Material und Vollmaterial im Aufbau der Schrumpfformteile einander abwechseln.

Die Erfindung sei anhand der in den Fig. 1 bis 7 dargestellten Verfahrensschritte sowie der nachstehend angeführten Mischungsbeispiele näher erläutert.

Eine Mischung der folgenden Zusammensetzung

Beispiel I

| | | |
|---|---|---|
| PE-Homopolymer (Dichte 0,94 g/$cm^3$) (Meltindex 0,2 -2,5) | 100 Teile | |
| Vinyltrimethoxisilan | 1,0 -1,5 | Teile |
| Dicumylperoxid | 0,03 - 0,05 | " |
| Katalysator (Naftovin SN/L) | 0,05 | " |
| Ruß (Acetylenschwarz Y) | 15 | " |

wird entweder bereits vorgemischt/oder, wie aus der Fig. 1 ersichtlich, in Form der einzelnen Komponenten in den Trichter 1 des Extruders 2 eingegeben. Zweckmäßig ist, wenn das Basispolymer und der Füllstoff - Ruß oder Kreide oder auch beides - in einem vorgelagerten Mischprozeß homogen vorverteilt werden. Im Extruder 2 erfolgt zunächst eine Homogenisierung durch Aufschmelzen und in einer anschließenden Zone desselben Extruders bzw. der Spritzgießmaschine ein Pfropfen des Silans auf die PE-Moleküle bei Temperaturen oberhalb 140° C, vorzugsweise zwischen 160° und 200° C. Werden als Schrumpfartikel Schrumpfkappen hergestellt, die mit oder ohne Durchlaßtüllen versehen sein können, dann erfolgt die Übergabe des gepfropften Materials in das Formwerkzeug 3 über den Spritzkanal 4. Hier z. B. oder auch vorher können dem Material Schäuminitiatoren, etwa in Form von feuchtem Gas, zugesetzt werden. Für den Fall, daß schrumpffähige Schläuche oder Manschetten herzustellen sind, kann man vorteilhaft so vorgehen, daß in der Art der kontinuierlichen Herstellung von langgestrecktem Gut, fortlaufend endlose Schläuche mit Hilfe eines Extruders mit Schlauchspritzwerkzeug und nachgeschalteter Vakuumkalibrierung gespritzt werden, die dann anschließend nach erfolgter Feuchtigkeitsvernetzung auf die geforderten Maße der Schläuche oder Manschetten aufgeblasen werden.

Unabhängig von der Art, d. h. der äußeren Form,der Schrumpfartikel ist es von Vorteil, wenn die erreichte Spritz- oder Spritzgußtemperatur dazu benutzt wird, eine beschleunigte Vernetzung in einer feuchten Atmosphäre vorzunehmen.

Hierzu dient das schematisch angedeutete Wasserbad 5, das eine Öl-Wasser-Emulsion oder ein Wasser-Glycerin-Gemisch enthält, um einmal eine Temperaturkonstanz auf einfache Weise zu gewährleisten und zum anderen die Wasserdiffusion in den Formling zu beschleunigen. Nach dem Vernetzungsvorgang erfolgt noch in warmem Zustand des Formkörpers die Aufweitung, z. B. der Kappe 6 über dem Dorn 7, durch den von innen her die Kappe 6 aufgeblasen und durch Abkühlen in diesem aufgeweiteten Zustand dieser eingefroren wird. Das Vernetzen bei höherer Temperatur erfolgt in enger zeitlicher Folge mit dem Aufweiten, um den Wärmeinhalt zu nutzen.

Selbstverständlich ist die Erfindung nicht auf die geschilderten Verfahrensabläufe beschränkt. So kann zum Zwecke der Vernetzung und/oder Aufweitung eine getrennt ablaufende Erwärmung der Formlinge erfolgen, z. B. wie in der Fig. 2 dargestellt, durch eine UHF-Bestrahlung 8, also Mikrowellenerwärmung, im Anschluß an die erfolgte Spritzung und Entformung, d. h. Herausnahme des Formteiles aus dem Spritzwerkzeug 3. Die Vernetzung kann aber auch durch

die den Polymeren bzw. den Zusatzstoffen anhaftende Feuchtigkeit bereits im Formnest des Spritzwerkzeuges teilweise oder ganz ablaufen und anschließend durch eine UHF-Erwärmung nur vervollständigt werden.

Es können aber auch bei höherer Temperatur geringe Mengen $H_2O$-abspaltende Zusatzstoffe, wie bestimmte Aluminiumoxidhydrate bzw. partiell hydrophobierte Silikate zugegeben werden. Der von diesen Additiven bei Spritztemperatur freigesetzte $H_2O$-Anteil reicht bereits für die Vernetzung aus. Das Formteil verläßt die Spritzgießmaschine dann vernetzt.

Handelt es sich nicht um die Herstellung von Kappen, sondern z. B. um die kontinuierliche Extrusion von Schläuchen, dann wird man zweckmäßig so vorgehen, daß, wie in der Fig. 3 schematisch dargestellt, der im Spritzkopf 10 des Extruders 11 hergestellte Schlauch zunächst einen Vakuumkalibrator 12 durchläuft und dann z. B. in ein Glycerin-Wasser-Bad 13 eingeführt wird, wobei dort die notwendige Vernetzung bei Temperaturen etwa zwischen 130$^o$ und 180$^o$ C, vorzugsweise 160$^o$ bis 180$^o$ C, vorgenommen wird. Der Schlauch wird dabei in an sich bekannter Weise zweckmäßig durch einen inneren Stützdruck in Form gehalten. In der Kühlvorrichtung 14 erfolgt eine Abkühlung, bevor mittels einer nicht dargestellten Abtrenn- oder Schneidvorrichtung die Formlinge, Schläuche oder Manschetten, abgetrennt und, wie z. B. in den Fig. 1 und 2 angedeutet, unter Erwärmung gedehnt werden, bevor zum Zwecke des Einfrierens des gedehnten Zustandes ein Abkühlen erfolgt.

Fig. 4 zeigt in einem Diagramm die besondere Eignung des Einsatzes feuchtigkeitsvernetzbarer gegenüber peroxidisch vernetzbarer Materialien, bei denen das molare Verhältnis von Silanmenge zum Peroxidanteil in der Regel größer als 10 : 1 ist. Der Temperaturverlauf (a) stellt die Verhältnisse bei der Feuchtigkeitsvernetzung, der Verlauf (b) über der Zeit die peroxidische Vernetzung dar. Bei der Feuchtigkeitsvernetzung wird die zu pfropfende PE-Mischung sowohl durch konduktiven Wärmeübergang von der beheizten Zylinderwand der Spritzgußmaschine sowie durch Dissipationsenergie der Schnecke (Friktion) auf die für die Pfropfung erforderliche Temperatur gebracht - ein Temperaturlimit nach oben besteht nicht - und gelangt mit dieser Temperatur in das Werkzeug, wo sofort der Kühlvorgang beginnt.

Bei peroxidischer Vernetzung darf die Masse vor der Formgebung 130° C nicht überschreiten; sie gelangt mit dieser Temperatur ins Werkzeug und muß dort auf Vernetzungstemperatur (200° C) gebracht und eine Weile gehalten werden, bevor das Werkzeug zum Zwecke der Entformung abgekühlt wird.

Der Energieaufwand, der notwendig ist, um beim Formgebungsprozeß durch Kühlen höhere Temperaturen als 130° C zu vermeiden, ist höher, als bei der Feuchtigkeitsvernetzung 200° C zu erreichen, weil hierbei die Energie der Schnekke (Dissipation) nutzbar gemacht werden kann.

Weitere Mischungen, die in Durchführung der Erfindung vorteilhaft für die Herstellung von Schrumpfartikeln Anwendung finden können, sind die folgenden:

Beispiel II

| | | |
|---|---|---|
| Polyäthylen-Copolymer mit 2 - 7 Mol % Vinylacetat | 100 | Teile |
| Calcinierter Clay (Hartkaolin M 100) | 10 | " |
| Ruß | 10 | " |
| Vinyltrimethoxisilan | 2,0 | " |
| Peroxid | 0,05 - 0,1 | " |
| Katalysator (Dibutylzinndilaurat (Naftovin SN/L)) | 0,05 | " |

Beispiel III

| | | |
|---|---|---|
| Polyäthylen-Copolymer mit 2-7 Mol % Vinalacetat | 100 | " |
| nichthygroskopische Kreide (z.B. Millicarb/Omya) | 15 | " |
| Ruß | 5 | " |
| Vinyltrimethoxisilan | 2,0 | " |
| Peroxid | 0,05-0,1 | " |
| Katalysator (Dibutylzinndilaurat (Naftovin SN/L)) | 0,05 | " |

Beispiel IV

| | | |
|---|---|---|
| Polyäthylen-Homopolymer (Dichte 0,94 g/cm$^3$, Meltindex 0,2 - 2,5) | 100 | Teile |
| Aluminiumoxidhydrat (z. B. Martinal A-s/101) | 2-10 | " |
| Ruß | 10 | " |
| Vinyltrimethoxisilan | 1,8-2,0 | " |
| Peroxid | 0,05-0,1 | " |
| Katalysator | 0,05 | " |

Anstelle von Aluminiumoxidhydrat können auch partiell hydrophobierte Kieselsäuren eingesetzt werden.

Die Mischung nach Beispiel I ist besonders für die Herstellung von Schrumpfschläuchen, aber auch Kappen und Manschetten geeignet, während die Mischung nach Beispiel IV hauptsächlich für die Herstellung von Kappen mit Vorteil einsetzbar ist, die nach der Formgebung bereits vollständig vernetzt vorliegen.

Bestehen, wie in der Erfindung vorgesehen, die Formteile aus einem geschäumten Material, dann ändern sich die vorgenannten Mischungsbeispiele I bis IV wie folgt:

Beispiel I-S

| | | |
|---|---|---|
| PE-Homopolymer (Dichte 0,94 g/cm$^3$, Meltindex 0,2 - 2,5) | 100 | Teile |
| Azodicarbonamid als chemisches Treibmittel | 0,5 -1,5 | " |
| Vinyltrimethoxisilan | 1,0 - 1,5 | " |
| Dicumylperoxid | 0,03 - 0,05 | " |
| Katalysator (Naftovin SN/L) | 0,5 | " |
| Ruß (Acetylenschwarz Y) | 2,5 | " |

Beispiel II-S

| | | |
|---|---|---|
| Polyäthylen-Copolymer mit 2 - 7 Mol % Vinylacetat | 100 | Teile |
| Azodicarbonamid (Treibmittel) | 0,5 | " |

| | | |
|---|---|---|
| Ruß (Ketjenblack EC) | 3,0 | Teile |
| Vinyltrimethoxisilan | 2,0 | " |
| Peroxid | 0,05 - 0,1 | " |
| Katalysator (Dibutylzinndilaurat (Naftovin SN/L)) | 0,05 | " |

Beispiel III-S

| | | |
|---|---|---|
| Polyäthylen-Copolymer mit 2 - 7 Mol % Äthylacrylat | 100 | Teile |
| Azodicarbonamid (Treibmittel) | 0,8 | " |
| Ruß (Ketjenblack EC) | 5 | " |
| Vinyltrimethoxisilan | 2,0 | " |
| Peroxid | 0,05 - 0,1 | " |
| Katalysator (Dibutylzinndilaurat (Naftovin SN/L)) | 0,05 | " |

Beispiel IV-S

| | | |
|---|---|---|
| Polyäthylen-Homopolymer (Dichte 0,94 $g/cm^3$, Meltindex 0,2 - 2,5) | 100 | Teile |
| Diphenoloxid -4,4-disulfohydrazid (Treibmittel) | 0,8 - 1,2 | " |
| Aluminiumoxidhydrat (z. B. Martinal A-s/101) | 2 - 10 | " |
| Ruß (Azetylenruß Noir Y 200) | 10 | " |
| Vinyltrimethoxisilan | 1,8 - 2,0 | " |
| Peroxid | 0,05 - 0,1 | " |
| Katalysator | 0,05 | " |

Weitere Mischungsbeispiele für Formteile mit geschäumter Wandung sind:

Beispiel V

| | | |
|---|---|---|
| Äthylenpropylen-Kautschuk (z.B. Buna AP 407 K) | 100 | Teile |
| Propylen (z. B. Hostalen PPH 1050) | 80 | " |
| Ruß (Ketjenblack EC) | 5 | " |
| Vinyltrimethoxisilan | 1,5 | " |
| Peroxid (Perkadox 14) | 0,1 | " |
| Katalysator (Dibutylzinndilaurat) | 0,05 | " |
| Azodicarbonamid (Treibmittel) | 0,5 - 1,5 | " |

Beispiel VI

| | | |
|---|---|---|
| Polyäthylen-Homopolymerisat (Meltindex: 1,5 - 2,0) | 100 | Teile |
| Ruß (Ketjenblack EC) | 5 | " |
| Physikalische Treibmittel (z. B. Trichlorfluormethan oder Dichlorfluormethan) | 0,5 - 2,5 | " |
| Vinyltrimethoxisilan | 1,5 | " |
| Peroxid (Luperox 270) | 0,25 | " |
| Katalysator (Dibutylzinndilaurat) | 0,05 | " |

Anstelle von Aluminiumoxidhydrat können auch partiell hydrophobierte Kieselsäuren eingesetzt werden.

Die Mischung nach Beispiel I-S ist besonders für die Herstellung von Schrumpfschläuchen, aber auch Kappen und Manschetten geeignet, während die Mischung nach Beispiel IV-S hauptsächlich für die Herstellung von Kappen mit Vorteil einsetzbar ist, die nach der Formgebung bereits vollständig vernetzt vorliegen.

Speziell für die rationelle Fertigung von Schrumpfschläuchen ist die Herstellung endloser Formstränge mit Schrumpfeigenschaften wesentlich. Ein Verfahren hierzu zeigen im einzelnen und ausführlich die Fig. 5 und 7. Ein von einem Vorrat abgezogener z. B. feuchtigkeitsvernetzter hohler Formstrang 21 wird deshalb, wie in der Fig. 5 dargestellt, zunächst einer Aufwärmvorrichtung 22 zugeführt. Diese Vorrichtung kann beispielsweise aus einer Heißwasser enthaltenden Wanne bestehen, es kann aber auch ein Strahlungsofen verwendet werden. Das so vorbehandelte Rohr läuft dann anschließend in den z. B. ebenfalls mit temperiertem Wasser gefüllten Vakuumkalibrator 23 ein. Der vorgeschaltete Wassertrog 24, der selbstverständlich auch durch Sprühdosen oder andere geeignete Mittel ersetzt werden kann, dient dazu, Wasser auf die Oberfläche des Formstranges 21 als Schmier- oder Gleitmittel bei der Einführung in den Kalibrator 23 aufzubringen. Als wesentlichen Bestandteil enthält der Kalibrator 23 das Paket 25 aus hintereinander angeordneten, mit Bohrungen für den durchlaufenden Strang versehenen Lochscheiben 26, deren Abstand untereinander in Durchlaufrichtung zunimmt. Der Kalibrator ist mit Wasser im Bereich 27 gefüllt, die Lochscheiben werden also überdeckt. Im Bereich 28 steht über dem Wasserspiegel ein Vakuum von bis zu

8 m WS an. Dieses Vakuum wirkt zwischen den Lochscheiben auf die Außenwandung des Formstranges, so daß ggf. im Zusammenwirken mit einem Stützdruck im Formstrang selbst, Schritt für Schritt im kontinuierlichen Durchlauf zwischen den Lochscheiben,eine Aufweitung erfolgt, während die jeweils an eine Aufweitung folgende Lochscheibe für die Kalibrierung sorgt. Das aufgeweitete Rohr oder der Schlauch 29 wird nach Verlassen des Kalibrators in seinem aufgeweiteten Zustand eingefroren, etwa durch Einführen in das Kühlbecken 30. Anschließend wird das Produkt aufgetrommelt oder sofort in verkaufsfertige Längen zugeschnitten.

In der Fig. 6 ist der Einlauf in den Kalibrator 23 noch einmal in gegenüber der Fig. 5 vergrößertem Maßstab dargestellt. Auf der Grundplatte 31 mit einer zentralen Bohrung 32 für den Einlauf des Formstranges 21 sind Haltebolzen 33, z. B. drei gleichmäßig über den Umfang verteilte, befestigt, die ihrerseits zur Halterung der Lochscheiben 26 als Stützelemente für den Strang dienen. Diese Lochscheiben 26 sind am Eingang wegen des noch leichter verformbaren Stranges 21 dicht und später mit fortschreitender Aufweitung mit größeren Abständen zueinander angeordnet. Im Sinne des zunehmenden Durchmessers durch fortschreitende Aufweitung wächst auch der Bohrungsdurchmesser der Scheiben. Das Wasser, das die Lochscheiben völlig umschließt, unterstützt durch seine Temperierung einmal den Aufweitungsprozeß und sorgt zum anderen als Gleitmittel ständig dafür, daß der sich aufweitende Formstrang geschützt kontinuierlich durch die Lochscheiben hindurchläuft, sich also nicht festfrißt.

Abweichend von der Fig. 5 ist in der Fig. 7 ein Ausführungsbeispiel dargestellt, bei dem Erwärmung und Kalibrierung praktisch gleichzeitig in dem mit einer temperierbaren Flüssigkeit, z. B. auch mit einem Glycerin-Wasser-Gemisch, gefüllten Behältnis 34 vorgenommen wird. Der kalibrierende, Lochscheiben 35 enthaltende Teil 36 ist dabei im hinteren Drittel dieses Behältnisses angeordnet. Die Abkühlung des Formstranges 37 zum Zwecke des Einfrierens des aufgeweiteten Zustandes erfolgt dann, wie bereits erwähnt, in einem Kühlbecken oder einer Kühlrinne 38.

K a b e l - u n d M e t a l l w e r k e
Gutehoffnungshütte Aktiengesellschaft

1-1700/1725/2-209

## Patentansprüche

1. Verfahren zur Herstellung von Schrumpfartikeln, wie Schrumpfschläuchen, -manschetten, -kappen und dergleichen, aus extrudierbaren Werkstoffen, bei dem zunächst ein Vorformling gespritzt bzw. extrudiert, anschließend vernetzt und in diesem vernetzten Zustand aufgeweitet sowie durch Abkühlen dieses aufgeweiteten Formlings dessen aufgeweiteter Zustand durch Einfrieren fixiert wird, dadurch gekennzeichnet, daß als Basismaterialien für die Schrumpfartikel Polymere dienen, die nach Aufpfropfen von Vernetzungshilfsmitteln, wie Organosilanen, vor oder während der Formgebung des Vorformlings unter Feuchtigkeitseinwirkung vernetzt werden.

2. Verfahren nach Anspruch 1, dadurch gekennzeichnet, daß die Vernetzung des Vorformlings während einer Feuchtigkeitseinwirkung bei erhöhten Temperaturen zwischen $80^{0}$ und $200^{0}$ C, vorzugsweise $140^{0}$ bis $180^{0}$ C, erfolgt und die Aufweitung auf den einzufrierenden Zustand bei noch erwärmtem Vorformling unmittelbar anschließend erfolgt.

3. Verfahren nach Anspruch 2, dadurch gekennzeichnet, daß zur Aufwärmung mit gleichzeitiger Vernetzung ein Glycerin-Wasser-Gemisch verwendet wird.

4. Verfahren nach Anspruch 2, dadurch gekennzeichnet, daß zur Aufwärmung mit gleichzeitiger Vernetzung ein mit Wasser mischbarer Polyalkohol, wie Äthylenglykol und Homologe, verwendet wird.

5. Verfahren nach Anspruch 1 oder einem der folgenden, dadurch gekennzeichnet, daß als Basismaterialien für die Schrumpfartikel Polyäthylen oder Äthylen-Mischpolymerisate verwendet werden.

6. Verfahren nach einem oder mehreren der Ansprüche 1 bis 4, dadurch gekennzeichnet, daß für die Schrumpfartikel Materialien auf Basis Äthylen-Propylen-Kautschuk allein oder als Verschnittkomponente mit Polyolefinen, etwa Polypropylen, verwendet werden.

7. Verfahren nach Anspruch 1 oder einem der folgenden, dadurch gekennzeichnet, daß die Basismaterialien Füllstoffe enthalten, die bei höherer Temperatur definiert geringe Mengen Wasser abspalten.

8. Verfahren nach Anspruch 1 oder einem der folgenden, dadurch gekennzeichnet, daß den Basismaterialien als Füllstoff ein nichthygroskopischer Ruß in einer Menge von 5 bis 40, vorzugsweise 8 bis 20 Teilen, bezogen auf 100 Teile Polymere, zugegeben wird.

9. Verfahren nach Anspruch 1 oder einem der folgenden, dadurch gekennzeichnet, daß den Basismaterialien anorganische Füllstoffe, wie Kreide, Kaolin, Talkum etc. in einer Menge von 5 bis 30 Teilen, vorzugsweise 10 bis 20 Teilen, auf 100 Teile Polymeres zugegeben werden.

10. Verfahren nach Anspruch 1 oder einem der folgenden, dadurch gekennzeichnet, daß die Vernetzung unter Feuchtigkeitseinwirkung bei Raumtemperatur erfolgt und zum Zwecke der Aufweitung anschließend eine Erwärmung des Vorformlings vorgenommen wird.

11. Verfahren nach Anspruch 10, dadurch gekennzeichnet, daß die Erwärmung über Mikrowellenbestrahlung erfolgt.

12. Verfahren nach Anspruch 11, dadurch gekennzeichnet, daß die Erwärmung auf $120^0$ bis $150^0$ C, vorzugsweise $130^0$ bis $150^0$ C, erfolgt.

13. Verfahren nach Anspruch 1 oder einem der folgenden, dadurch gekennzeichnet, daß das molare Mengenverhältnis von Silanen oder deren Verbindungen zu Peroxiden etwa 10 : 1 beträgt.

14. Verfahren nach Anspruch 2, dadurch gekennzeichnet, daß die Vernetzungstemperaturen durch den Form- oder Spritzvorgang selbst bewirkt werden.

15. Verfahren nach Anspruch 1 oder einem der folgenden, dadurch gekennzeichnet, daß die Schrumpfartikel nach dem Aufweiten und Abkühlen innen mit einem Schmelzkleber, beispielsweise auf Basis Polyamid oder Polyester, beschichtet werden.

16. Verfahren zur Herstellung von Schrumpfschläuchen nach Anspruch 1 oder einem der folgenden, aus extrudierbaren Werkstoffen, bei dem zunächst ein hohler Formstrang beliebiger Länge gespritzt bzw. extrudiert, anschließend vernetzt und in diesem vernetzten Zustand oder auch bei nicht vernetzbaren Werkstoffen in unvernetzter Form durch Anlegen an umgebende Formgebungselemente aufgeweitet sowie durch Abkühlen dieses aufgeweiteten Formstranges dessen aufgeweiteter Zustand durch Einfrieren fixiert wird, dadurch gekennzeichnet, daß die Aufweitung bis auf den vergrößerten Enddurchmesser des Formstranges durch eine mehrfache Teilaufweitung mit jede Teilweitung abschließender Kablibrierung des Formstranges vorgenommen wird, wobei die Aufweitung durch zwischen jeder Kalibrierung auf die Oberfläche des Formstranges einwirkenden Unterdruck erfolgt.

17. Verfahren nach Anspruch 16, dadurch gekennzeichnet, daß die Aufweitung des hohlen Formstranges bis auf den Enddurchmesser in einem unter Unterdruck stehenden Flüssigkeitsbad erfolgt.

18. Verfahren nach Anspruch 17, dadurch gekennzeichnet, daß die Flüssigkeit gleichzeitig als Schmier- oder Gleitmittel für die Kalibrierung dient.

19. Verfahren nach einem oder mehreren der Ansprüche 16 bis 18, dadurch gekennzeichnet, daß während der Aufweitung des hohlen Formstranges durch den auf die äußere Oberfläche wirkenden Unterdruck die innere Oberfläche mit einem sog. Stützdruck beaufschlagt wird.

20. Vorrichtung zur Durchführung des Verfahrens nach einem oder mehreren der Ansprüche 16 bis 19, dadurch gekennzeichnet, daß zur Aufweitung des hohlen Formstranges nach oder während einer Erwärmung ein sog. Kalibrator aus einzelnen in Durchlaufrichtung hintereinander angeordneten Lochscheiben dient, deren Bohrungsdurchmesser, in Durchlaufrichtung gesehen, stetig oder stufenweise zunimmt.

21. Vorrichtung nach Anspruch 20, dadurch gekennzeichnet, daß die Lochscheiben alle gemeinsam in einem oder zu Paketen zusammengefaßt jeweils in gesonderten ggf. temperierbaren und dicht verschließbaren Flüssigkeit führenden Behältern angeordnet sind.

22. Nach dem Verfahren nach einem oder mehreren der Ansprüche 1 bis 21 hergestellte Schrumpfartikel, bestehend aus einem durch Einwirkung von Feuchtigkeit vernetzten Polymermaterial,auf dessen Makromoleküle Organosilane aufgepfropft sind.

23. Schrumpfartikel nach Anspruch 22, dadurch gekennzeichnet, daß die begrenzenden Wandungen dieser Formteile ganz oder teilweise aus geschäumtem Material bestehen.

24. Schrumpfformteile nach Anspruch 23, bei denen die Wandungen teilweise aus geschäumtem Material bestehen, dadurch gekennzeichnet, daß Schichten aus geschäumtem Material und Vollmaterial einander abwechseln.

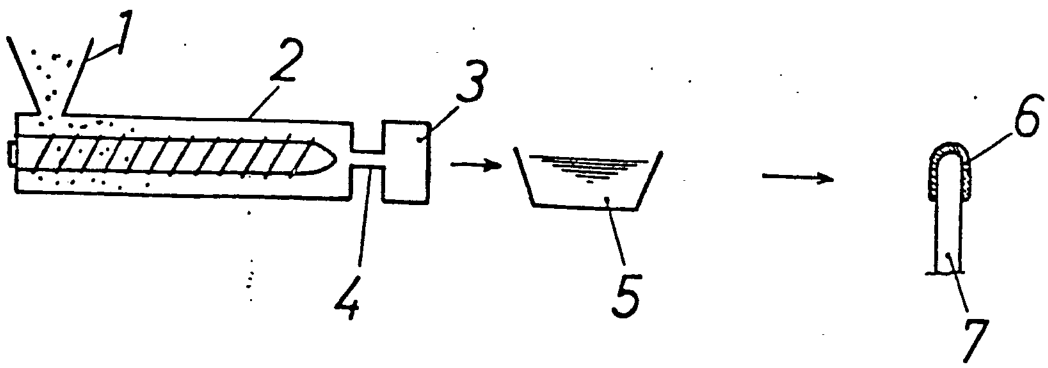


Fig.1

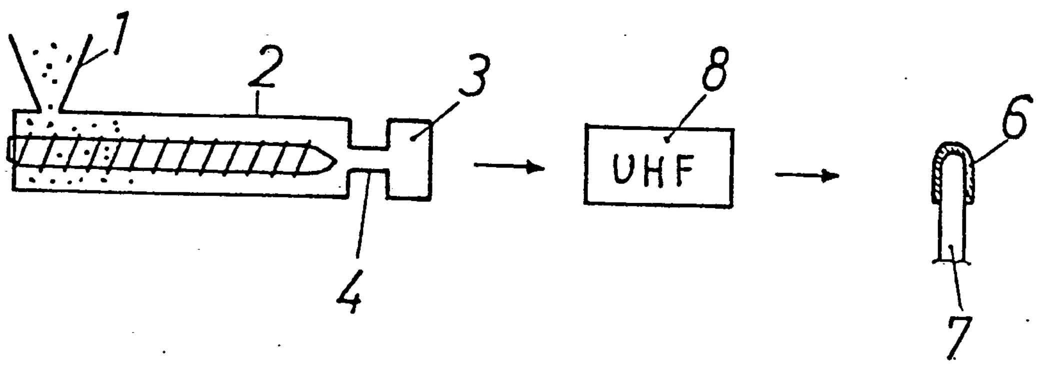


Fig.2

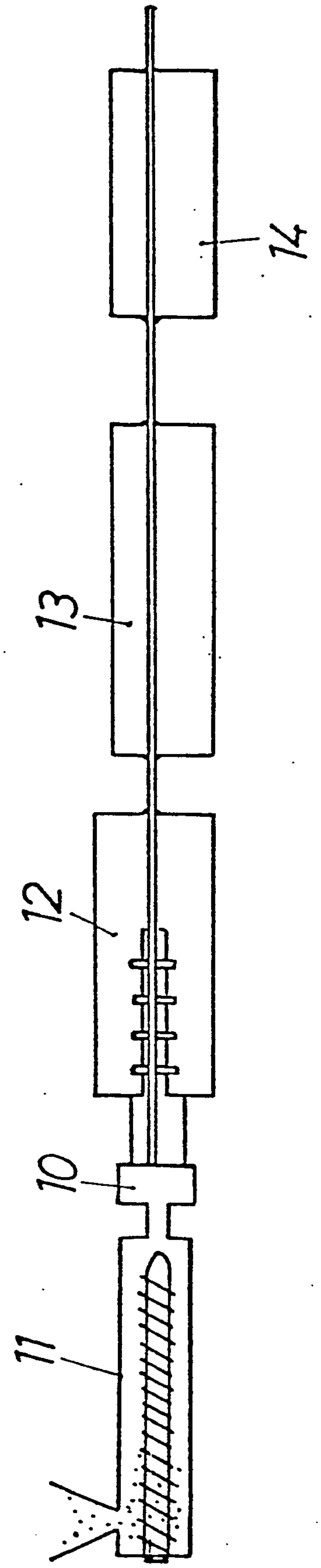


Fig.3

3/5

Temperaturverlauf
und
Zykluszeit

beim Spritzgießen

a) Silan.-PE
b) VPE

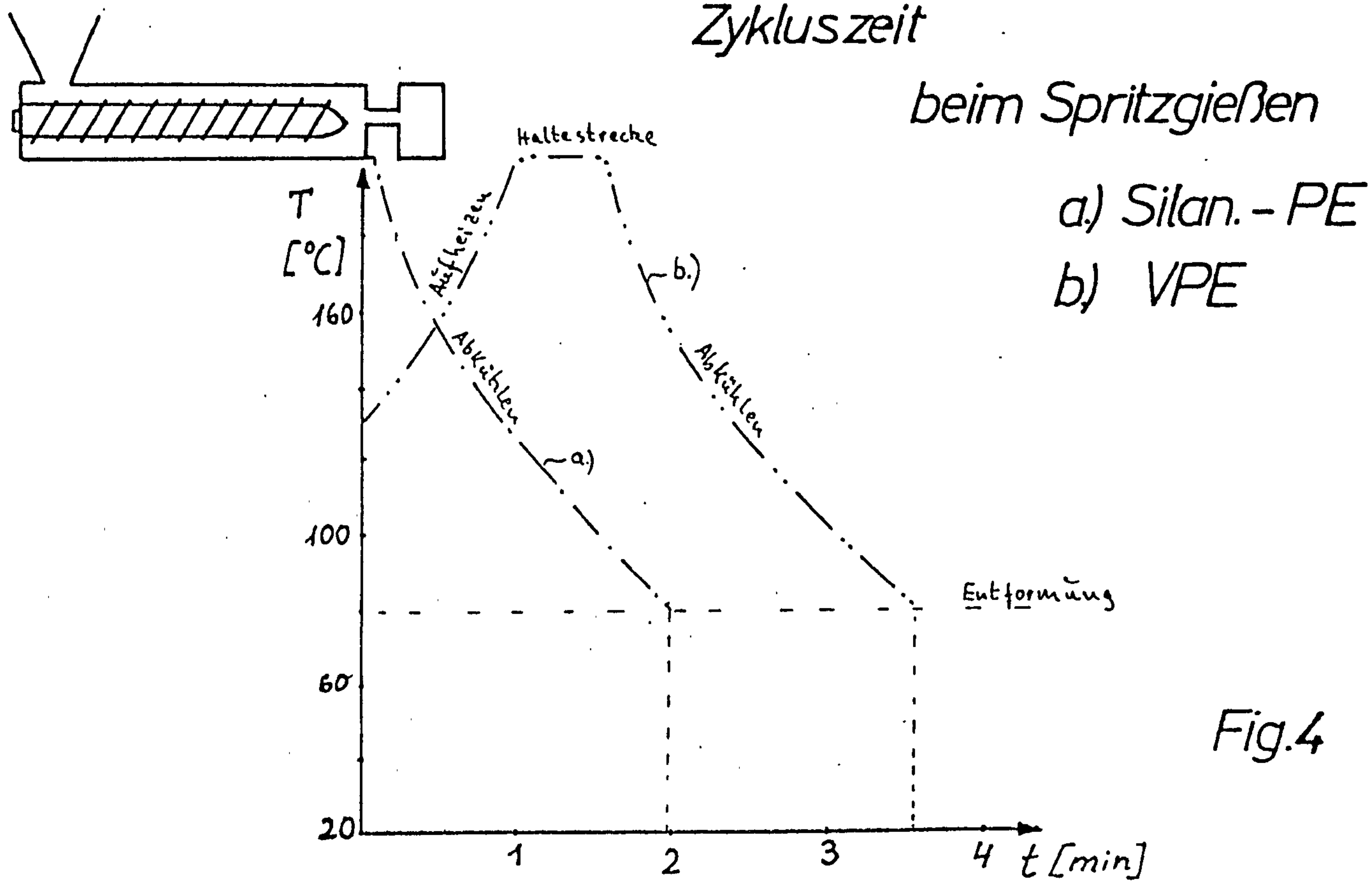


Fig.4

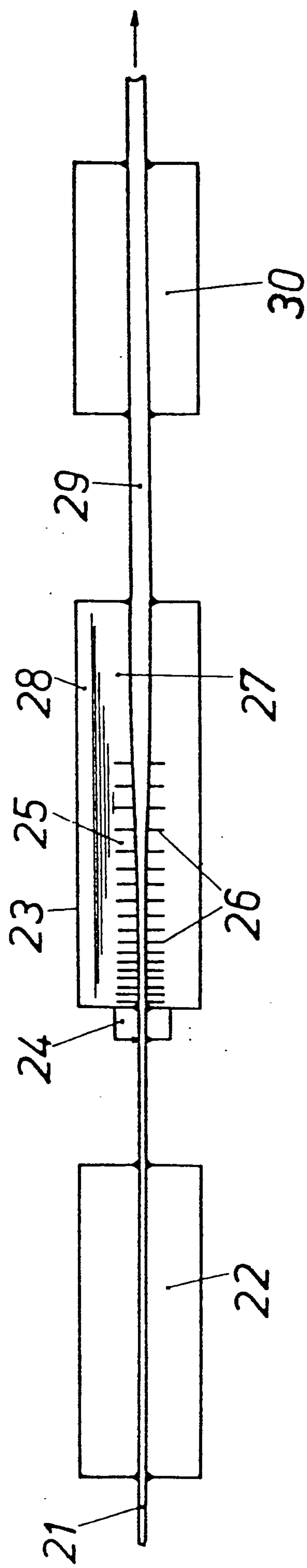


Fig.5

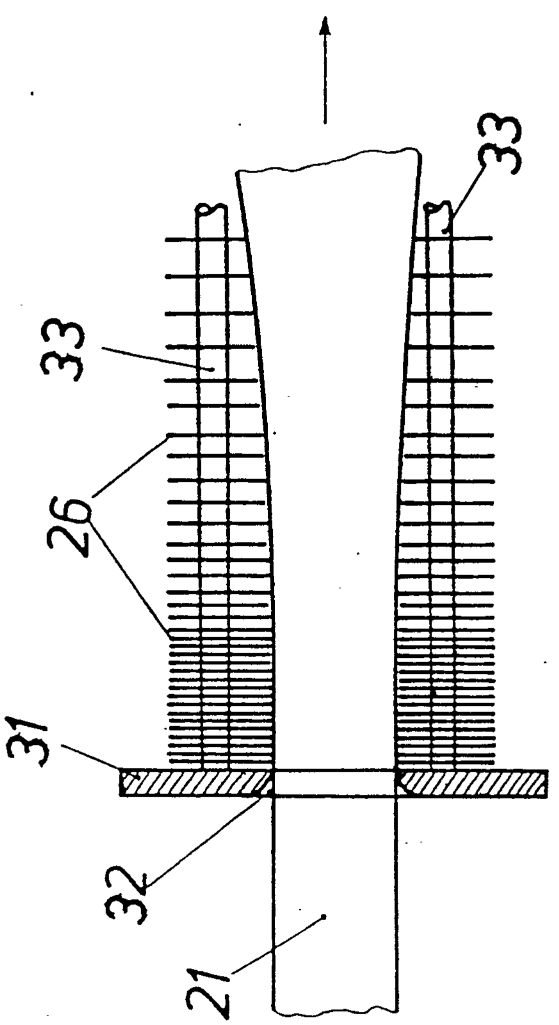


Fig.6

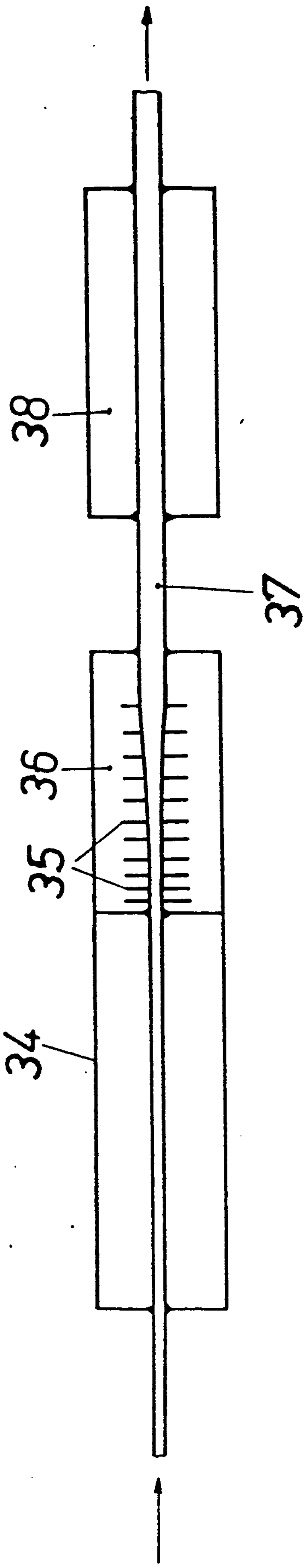


Fig.7